Europäisches Patentamt

European Patent Office

Office européen des brevets

(19)

(11) Veröffentlichungsnummer: **0 206 369**
**B1**

(12) **EUROPÄISCHE PATENTSCHRIFT**

(45) Veröffentlichungstag der Patentschrift: **16.08.90**

(21) Anmeldenummer: **86200757.2**

(22) Anmeldetag: **02.05.86**

(51) Int. Cl.⁵: **H 04 N 5/78, H 03 H 7/12**

(54) Automatische FM-Seitenband-Pegelregelung für Video-Recorder.

(30) Priorität: **10.05.85 DE 3516913**

(43) Veröffentlichungstag der Anmeldung:
**30.12.86 Patentblatt 86/52**

(45) Bekanntmachung des Hinweises auf die
Patenterteilung:
**16.08.90 Patentblatt 90/33**

(84) Benannte Vertragsstaaten:
**AT DE FR GB**

(56) Entgegenhaltungen:
**AT-B- 346 099
DE-A-2 747 127
DE-B-1 512 335
US-A-3 753 159
US-A-4 426 630
US-A-4 445 152**

(73) Patentinhaber: **Philips Patentverwaltung GmbH
Wendenstrasse 35 Postfach 10 51 49
D-2000 Hamburg 1 (DE)**
(84) **DE**

(73) Patentinhaber: **N.V. Philips'
Gloeilampenfabrieken
Groenewoudseweg 1
NL-5621 BA Eindhoven (NL)**
(84) **FR GB AT**

(72) Erfinder: **Kupfer, Karl-Heinz
Krefelder Strasse 145
D-4150 Krefeld 29 (DE)**

(74) Vertreter: **Kupfermann, Fritz-Joachim, Dipl.-Ing.
et al
Philips Patentverwaltung GmbH Wendenstrasse
35 Postfach 10 51 49
D-2000 Hamburg 1 (DE)**

## Beschreibung

Die Erfindung bezieht sich auf eine Schaltungsanordnung für eine Video-Wiedergabevorrichtung mit einem im Luminanzsignal-Wiedergabezweig hinter die Video-Köpfe geschalteten Bandpaß, dessen Dämpfungscharakteristik zur Beeinflussung der Amplitudenchrakteristik des FM-Seitenbandspektrums mittels eines aus dem demodulierten Luminanzsignal gebildeten Steuersignals veränderbar ist und dem ein FM-Demodulator und eine Crispening-Schaltung nachgeschaltet sind.

Bei Video-Aufzeichnungsgeräten wird ein Luminanzsignal vor der Aufzeichnung frequenzmoduliert. Die dabei verwendete Trägerfrequenz beträgt z. B. bei Heim-Video-Recordern 3 MHz. Bei der Wiedergabe soll das untere und das obere Seitenband im Pegel möglichst symmetrisch zu dieser Trägerfrequenz verlaufen, da so hinter dem Demodulator die hohen Frequenzen den höch-sten Pegel erreichen, d. h. also das Bild am schärfsten ist. Insbesondere bei Heim-Video-Recordern hat jedoch das Bandmaterial sehr verschieden Eigenschaften. So heben zB. modernere Bänder die Höhen im Bereich 4 bis 5 MHz wesentlich stärker an als ältere. Dies hat zwar den Vorteil eines größeren Rauschabstandes, führt jedoch zu dem Problem, daß bei Wiedergabe auf einem auf ältere Bandtypen eingestellten Gerät der Demodulator zur Trägerfrequenz stark unsymmetrische Seitenbänder erhält, was zu einem unscharfen Bild, im Extremfall zu Bildstörungen führt. Wird der Recorder auf die moderneren Bänder mit stärkerer Höheneinnehmung eingestellt, ergibt sich umgekehrt bei älteren Bändern das Problem, daß das untere Seitenband im Pegel stärker als das obere Seitenband ist. Ein solches Gerät kann also immer nur für Bandtypen mit einer bestimmten Empfindlichkeit optimiert werden; bei anderen Bandtypen treten schlechtere Wiedergabeeigenschaften auf.

Aus der DE-CZ-32 01 451 ist eine Wiedergabevorrichtung für Videosignale bekannt, bei der mit Hilfe eines aus dem wiedergegebenen Signal gewonnenen Steuersignals eine im wesentlichen Bandpaßcharakteristik aufweisende Entzerrerschaltung in ihrer Dämpfungscharakteristik verändert wird.

Es ist Aufgabe der Erfindung, eine Video-Wiedergabevorrichtung zu schaffen, die ohne Nachjustage die Wiedergabe von Bändern der verschiedenen Charakteristika mit möglichst guter Bildschärfe und ohne Bildstörungen gestattet.

Diese Aufgabe ist erfindungsgemäß dadurch gelöst, daß die Dämpfungscharakteristik des Bandpasses in Abhängigkeit des Pegels der höherfrequenten Anteile des demodulierten Luminanzsignals automatisch geregelt wird, indem mit Hilfe eines der Crispening-Schaltung entnommenen, mit einer Pegelanhebung der höherfrequenten Anteile versehenen Luminanzsignals die Dämpfungscharakteristik des Bandpasses in der Weise verändert wird, daß am Ausgang des Bandpasses ein zur FM-Trägerfrequenz angenähert amplitudensymmetrisches FM-Spektrum des Luminanzsignals anliegt.

Zur Beeinflussung des FM-Seitenbandspektrums wird also die Dämpfungscharakteristik des dem Demodulator vorgeschalteten Bandpasses nicht mehr fest eingestellt, sondern vielmehr durch eine automatische Regelung vorgenommen, die ein mit einer Höhenanhebung versehenes Luminanzsignal erhält, das der dem Demodulator nachgeschalteten Crispening-Schaltung entnommen wird. Dieses Signal wird über mehrere Vollbilder aufintegriert. Überschreitet dieses Signal einen bestimmten Pegel, so bedeutet dies, daß eine zu starke Höhenanhebung vorliegt, daß also das obere Seitenband des FM-Spektrums stärker bedämpft werden muß, was die automatische Regelung durch Veränderung der Dämpfungscharakteristik des Filters vornimmt.

Diese Schaltungsanordnung bietet also den Vorteil, daß nicht nur ein bestimmter Bandtyp, sondern Bandtypen mit verschiedenen Empfindlichkeiten und Frequenzgängen benutzt werden können, ohne daß die Dämpfungscharakteristik des Bandpasses per Hand nachgeregelt werden muß, oder daß Bildstörungen auftreten.

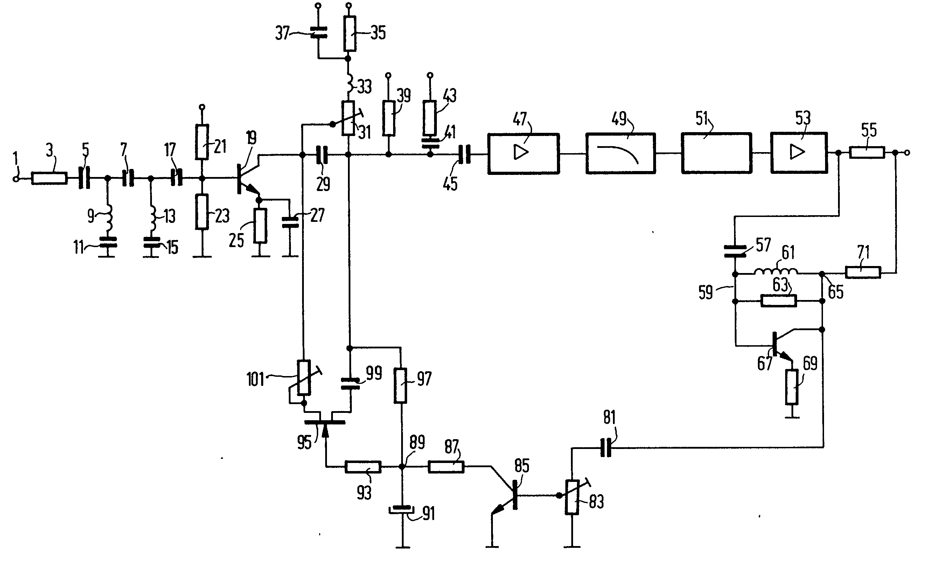

Ein Ausführungsbeispiel der Erfindung wird anhand der Figur näher erläutert.

In der Zeichnung ist oben ein an sich bekannter Wiedergabezweig einer Video-Wiedergabevorrichtung dargestellt. Hinter dem Eingang 1 der Schaltung gelangt das von den Video-Köpfen kommende Signal über einen Hochpaß und einer anschließenden Verstärkerstufe zu einem regelbaren Bandpaß, dessen Dämpfungscharakteristik mit Hilfe eines Potentiometers einstellbar ist. Hinter diesem Bandpaß ist eine weitere Verstärkerstufe geschaltet, der ein Tiefpaß folgt. Hinter dem Tiefpaß wird das Signal demoduliert, weiter verstärkt und anschließt einer Crispening-Schaltung zugeführt, die die höherfrequenten Anteile des Luminanzsignals anhebt, so daß ein besserer Schärfeeindruck des Bildes entsteht.

Die Schaltung ist im einzelnen wie folgt aufgebaut: Hinter dem Eingang 1 gelangt das von den Video-Köpfen kommende Signal in den Hochpaß, der aus einer Reihenschaltung eines Wiederstandes 3, zweier Kapazitäten 5 und 7, zwischen denen die Reihenschaltung einer Induktivität 9 und einer Kapazität 11 gegen Masse geführt ist, und einer hinter der Kapazität ebenfalls gegen Masse geführten Reihenschaltung einer Induktivität 13 und einer Kapazität 15 aufgebaut ist. Hinter diesem Hochpaß gelangt das Signal über eine Koppelkapazität 17 zur Basis des Transistors 19, von der ein Wiederstand 21 zur Spannungsversorgung und ein Wiederstand 23 zur Masse führt. Der Emitter des Transistors 19 ist über eine Parallelschaltung eines Widerstandes 25 und einer Kapazität 27 gegen Masse geschaltet. Der Kollektor des Transistors 19 führt nun zu dem regelbaren Bandpaß. Parallel zu einer dem Kollektor des Transistors 19 nachgeschalteten Kapazität 29 ist ein Potentiometer 31 angeordnet, dessen Schleiferkontakt mit dem Kollektor des Transistors 19 verbunden ist und dessen eine Wicklungsende das Signal hinter der Kapazität 29 greift und dessen anderes Wicklungsende über eine Induktivität 33 und die Parallelschaltung eines Widerstandes 35 und einer Kapazität 37 zur Spannungsversorgung geführt ist. Hinter der Kapazität 29 führen ferner ein Widerstand 39 und die Reihenschaltung einer Kapazität 41 und eines Widerstandes 43 zur Spannungsversorgung. Hinter diesem regelbaren Bandpaß gelangt das Signal über eine Koppelkapazität 45 zu einer ersten Verstärkerstufe 47, zu einem Tiefpaß 49, zum Demodulator 51 und zu einer zweiten Verstärkerstufe 53, die sämtlich nicht näher dargestellt sind. Dieser Verstärkerstufe 53 ist ein Widerstand 55 nachgeschaltet. Die Crispening-Schaltung ist beiderseits dieses Widerstandes 55 angeschlossen. Das Signal vor dem Widerstand 55 wird über eine Kapazität 57 dem Sternpunkt 59 zugeführt. Von diesem Sternpunkt 59 führt eine Induktivität 61 und ein Widerstand 63 zum Sternpunkt 65. Ferner ist die Basis eines Transistors 67 mit dem Sternpunkt 59 und der Kollektor mit dem Sternpunkt 65 verbunden. Der Emitter des Transistors 67 ist über einen Widerstand 69 mit Masse verbunden. Das Signal des Sternpunktes 65 wird über einen Widerstand 71 hinter den Widerstand 55 geführt.

Die automatische Regelung der Dämpfungscharakteristik des regelbaren Bandpasses wird durch folgende Schaltung vorgenommen.

Vom Sternpunkt 65 der Crispening-Schaltung gelangt das Signal über eine Kapazität 81 auf die erste End-Anzapfung eines Potentiometers 83, dessen zweite End-Anzapfung gegen Masse geführt ist. Der Schleiferanschluß des Potentiometers 83 führt zur Basis eines Transistors 85, dessen Emitter gegen Masse geführt ist und dessen Kollektor über einen Widerstand 87 zu einem Sternpunkt 89 führt. Von diesem Sternpunkt 89 führt eine Kapazität 91 gegen Masse, ein Widerstand 93 zum Gate-Anschluß eines Feldeffekttransistors 95 und ein Widerstand 97 zum Verbindungspunkt der Kapazität 29 und des Widerstandes 39. Die Source-Elektrode des Feldeffekttransistors 95 ist mit dem einen Wicklungsende und dem Schleiferanschluß eines potentiometers 101 verbunden, dessen anderes Wicklungsende zu dem Verbindungspunkt zwischen Transistor 19 und Kapazität 29 führt. Die Drain-Elektrode des Feldeffekttransistors 95 ist über einen Widerstand 99 mit dem Verbindungspunkt zwischen der Kapazität 29 und dem Widerstand 39 verbunden.

Die Wirkungsweise der Schaltungsanordnung ist folgende: Über den Widerstand 97 wird die Kapazität 91 durch das noch nicht demodulierte, hinter der Kapazität 29 anliegende Luminanzsignal aufgeladen, so daß der Feldeffekttransistor 95 voll durchsteuert. Über das Potentiometer l01 ist der entstehende Gesamtwiderstand begrenzt. Das Potentiometer 31 ist auf normale Bänder eingestellt, d. h. Bänder, die einen etwa durchschnittlichen Frequenzgang aufweisen. Über die Kapazität 81 und das Potentiometer 83 gelangt das mit einer starken Höhenanhebung von z. B. 10 dB bei 3 MHz versehene Luminanzsignal zum Transistor 85. Das Potentiometer 83 ist so eingestellt, daß der Transistor 85 bei normalem 3 MHz-Anteil noch nicht öffnet. Wird jedoch ein bestimmter Pegel überschritten, so wird der Transistor 85 leitend, und die Kapazität 91 wird über den Widerstand 87 und den Transistor 85 entladen. Dies wiederum führt dazu, daß der Feldeffekttransistor hochohmiger wird. Der zur Kapazität 29 liegende Widerstand wird somit kleiner, wodurch die Dämpfungscharakteristik des Bandpasses angepaßt wird. Die Grundeinstellung der Dämpfungscharakteristik dieses Bandpasses wird durch das Potentiometer 31 vorgenommen, dem der Feldeffekttransistor 95 mit dem Potentiometer 101 parallelgeschaltet ist. Ist der Feldeffekttransistor 95 gesperrt, so ist lediglich das Potentiometer 31 wirksam, das die Grundeinstellung des Bandpasses bestimmt. Ist der Feldeffekttransistor 95 voll durchgesteuert, so wird durch die Einstellung des Potentiometers 101 die maximale Wirkung der automatischen FM-Seitenband-Pegelregelung eingestellt. Das Potentiometer 83 bestimmt den Einsatzpunkt der automatischen Pegelregelung.

Die Schaltungsanordnung dieses Ausführungsbeispieles weist den zusätzlichen Vorteil auf, daß der ursprüngliche Wiedergabezweig des Gerätes unverändert bleibt. Es ist lediglich an der Crispening-Schaltung ein Signal abzunehmen, das der automatischen Verstärkungsregelung zugeführt wird, deren Ausgänge beiderseits der Kapazität 29 angeschlossen sind.

**Patentansprüch**

Schaltungsanordnung für eine Video-Wiedergabevorrichtung mit einem im Luminanzsignal-Wiedergabezweig hinter die Video-Köpfe geschalteten Bandpaß, dessen Dämpfungscharakteristik zur Beeinflussung der Amplitudencharakteristik des FM-Seitenbandspektrums mittels eines aus dem demodulierten Luminanzsignal gebildeten Steuersignals veränderbar ist und dem ein FM-Demodulator und eine Crispening-Schaltung nachgeschaltet sind, dadurch gekennzeichnet, daß die Dämpfungscharakteristik des Bandpasses in Abhängigkeit des Pegels der höherfrequenten Anteile des demodulierten Luminanzsignals automatisch geregelt wird, indem mit Hilfe eines der Crispening-Schaltung entnommenen, mit einer Pegelanhebung der höherfrequenten Anteile versehenen Luminanzsignals die Dämpfungscharakteristik des Bandpasses in der Weise verändert wird, daß am Ausgang des Bandpasses ein zur FM-Trägerfrequenz angenähert amplitudensymmetrisches FM-Spektrum des Luminanzsignals anliegt.

**Revendication**

Montage de circuit pour un dispositif de reproduction vidéo comportant un filtre passe-bande monté dans la branche de reproduction de signal de luminance après les têtes vidéo, dont la caractéristique d'amortissement peut être modifiée au moyen d'un signal de commande formé à partir du signal de luminance démodulé en vue d'influencer la caractéristique d'amplitude du spectre de bande latérale FM et qui est suivi d'un démodulateur FM et d'un circuit d'accentuation des contours, caractérisé en ce que la caractéristique d'amortissement du filtre passebande est réglée automatiquement en fonction du niveau de la fraction à haute fréquence du signal de luminance démodulé, par modification de la caractéristique d'amortissement du filtre passe-bande au moyen d'un signal de luminance prélevé sur le circuit d'accentuation des contours, accusant une augmentation de niveau de sa fraction à haute fréquence, d'une manière telle qu'à la sortie du filtre passe-bande, soit présent un spectre FM du signal de luminance qui est approximativement symétrique en amplitude par rapport à la fréquence porteuse FM.

**Claim**

A circuit arrangement for a video playback apparatus, comprising a band-pass filter arranged in the luminance-signal playback channel after the video heads and having an attenuation characteristic which is variable by means of a control signal derived from the demodulated luminance signal in order to influence the amplitude characteristic of the FM sideband spectrum, which filter is followed by an FM demodulator and a crispening circuit, characterized in that the attenuation characteristic of the band-pass filter is controlled automatically in dependence upon the level of the higher-frequency components of the demodulated luminance signal in that the attenuation characteristic of the band-pass filter is varied by means of a luminance signal provided with pre-emphasised higher frequency components and taken from the crispening circuit, in such a manner that a luminance signal whose FM spectrum is substantially amplitude-symmetrical relative to the FM carrier frequency appears on the output of the band-pass filter.

1